# EUROPÄISCHE PATENTSCHRIFT

(11) **EP 1 849 023 B1**
(45) Veröffentlichungstag und Bekanntmachung des Hinweises auf die Patenterteilung: **09.07.2008**
(21) Anmeldenummer: 06706730.6
(22) Anmeldetag: 08.02.2006
(51) Int. Cl.: G01S 15/04

(54) **ÜBERWACHUNGSEINRICHTUNG FÜR EINEN WASSERFÜHRENDEN ZULAUFKANAL**
DEVICE FOR MONITORING A WATER-SUPPLYING INLET CHANNEL
DISPOSITIF DE SURVEILLANCE POUR CANAL D'AMENEE D'EAU

(30) Priorität: 17.02.2005 DE 102005007207
(43) Veröffentlichungstag der Anmeldung: 31.10.2007
(73) Patentinhaber: ATLAS ELEKTRONIK GMBH, 28305 Bremen (DE)
(72) Erfinder: PRENDEL, Peter, 28844 Weyhe (DE); HORNFELD, Willi, 27793 Wildeshausen (DE); VOGEL, Jürgen, 28844 Weyhe (DE); WEBER, Friedrich, 27404 Zeven-Badenstedt (DE)
(86) Internationale Anmeldenummer: PCT/EP2006/001086
(87) Internationale Veröffentlichungsnummer: WO 2006/087124

(56) Entgegenhaltungen:
- WO-A-00/58753
- GB-A- 984 398
- US-A- 3 914 729
- US-A- 4 862 427
- US-A- 5 025 425
- US-A- 5 235 558
- US-A- 5 696 489

## Beschreibung

Die Erfindung betrifft eine Überwachungseinrichtung für einen wasserführenden Zulaufkanal zu einer Industrieanlage, insbesondere einem Kraftwerk, zum Erkennen von mit dem Wasserstrom eindringenden Objekten.

Eine solche Überwachungseinrichtung dient dem Schutz von Industrieanlagen und Kraftwerken, insbesondere von Kernkraftwerken, die auf einen permanenten Wasserzulauf aus offenen Gewässern, wie Flüssen und dgl., angewiesen sind. Während das Eindringen von größeren Objekten, die im Wasserstrom mitgeführt werden, durch einfache mechanische Schutzmaßnahmen, wie die Zulauföffnung abdeckende Schutzgitter oder Rechen, verhindert werden kann, ist die Industrieanlage bzw. das Kraftwerk schutzlos gegen das vorsätzliche Eindringen von z.B. Tauchern über den Zulaufkanal. Dies bedeutet ein erhebliches Gefährdungspotential für die Industrieanlage bzw. das Kraftwerk, da sich über den ungeschützten Wasserweg fremde Objekte, wie Taucher oder unbemannte Unterwasserfahrzeuge, einschleusen können, die zur Ausführung von Sabotageakten in die Industrieanlage bzw. das Kraftwerk eindringen wollen.

Eine bekannte Überwachungseinrichtung zum Schutz einer Hafeneinfahrt, einer Flussmündung oder einer Küstenlinie (GB 2 111 679 A) weist eine Mehrzahl von am Wassergrund angeordneten Sonaren auf, die längs der zu schützenden Linie aufgereiht sind. Jedes Sonar spannt im Wasser einen kegelförmigen Überwachungssektor auf, in den Schallimpulse hin zur Wasseroberfläche ausgesendet werden. Die Überwachungssektoren überlappen einander und bilden einen "akustischen Zaun". Jedes Objekt, welches diesen Zaun durchquert, reflektiert die Schallimpulse, die als Echos von den Sonaren empfangen werden. Die Echos werden ausgewertet und zeigen das Passieren der Grenzlinie durch ein Objekt an.

Eine bekannte Überwachungseinrichtung zum Detektieren von eine Grenzlinie unter Wasser passierenden Objekten (US 6 813 220 B2) weist eine Vielzahl von Sonaren auf, die im Abstand voneinander längs der Grenzlinie angeordnet sind. Die Sonare weisen omnidirektionale Richtcharakteristiken auf, wobei die Richtcharakteristiken benachbarter Sonare sich überlappen. Die Sonare nehmen Sonardaten eines die Grenzlinie passierenden Objektes auf, und ein Zentralprozessor bestimmt aus den Sonardaten den Kurs des Objekts und schätzt den Gefährdungsgrad des Vordringens des detektierten Objekts über die Grenzlinie hinaus.

Ein bekanntes Überwachungssystem zum Detektieren des Unterwassereindringens eines Körpers in eine Hafeneinfahrt (US 3 914 729) besitzt ein hochauflösendes Sonar mit einer Unterwasserantenne, die eine vertikal orientierte, horizontal fächerartige Richtcharakteristik aufweist. Die Hauptachse der Richtcharakteristik ist schräg zur Wasseroberfläche hin gerichtet. Das Sonar sendet periodisch Sendeimpulse aus und empfängt die von der Wasseroberfläche zurückgestreuten Echos. Die Echos werden abhängig von der Entfernung auf einem Display aufgezeichnet. Signifikante Änderungen in der Darstellung auf dem Display zeigt das Eindringen eines Körpers in die Hafeneinfahrt.

Eine bekannte Überwachungsvorrichtung für ein Schwimmbecken dient zur Detektion von lebenden Geschöpfen, wie Tieren, Vögeln, kleinen Kindern, die unbeabsichtigt ins Schwimmbecken fallen und für die Ertrinkungsgefahr besteht (WO 00/58753 A1). Die Überwachungsvorrichtung besitzt zwei Sonare, die an gegenüberliegenden Seiten des Schwimmbeckens angeordnet sind. Jedes Sonar erzeugt einen Beamfächer von Ultraschallwellen und empfängt die Ultraschallechos, die aus Reflexionen der Ultraschallwellen an den Beckenwänden und an im Schwimmbecken sich befindlichen Objekten hervorgerufen werden. Die beiden Sonare sind so angeordnet und ausgebildet, dass ihre Beamfächer die Wasseroberfläche des Schwimmbeckens überdecken. Ein in das Schwimmbecken fallender Körper erzeugt Echosignale, deren Lage von den Echosignalen, die von den Beckenwänden herrühren, abweichen. Diese abweichenden Echosignale werden ausgewertet und zur Alarmausgabe herangezogen.

Eine bekannte Überwachungsvorrichtung für einen Wasserkanal (US 5 235 558 A) besitzt zwei sog. akustische Projektoren, die auf gegenüberliegenden Seiten des Wasserkanals angeordnet sind und Schallimpulse ins Wasser aussenden. Jeder Projektor ist als sog. parametrisches Akustik-Array ausgebildet, das Schallimpulse einer bestimmten Frequenz aussendet, wobei das eine Akustik-Array eine etwas höhere und das andere Akustik-Array eine etwas tiefere Frequenz besitzt. Durch Überlagerung der Schallimpulse unterschiedlicher Frequenzen im Wasser entstehen Schallimpulse mit der kleinen Differenzfrequenz, die sich im Wasser mit nur geringer Dämpfung ausbreiten. Jedem akustischen Projektor ist ein akustischer Empfänger zugeordnet, der entfernt vom Projektor, z.B. an der gegenüberliegenden Kanalseite angeordnet ist, so dass Projektor und Empfänger ein bistatisches System bilden. An jedem Objekt, das eine der von den beiden akustischen Projektoren akustisch beleuchteten Zone, den sog. Projektor-Beam durchdringt, werden die vom Projektor abgestrahlten Schallimpulse reflektiert und von mindestens einem der Empfänger empfangen, so dass die Anwesenheit eines Objekts im Wasser detektiert wird.

Der Erfindung liegt die Aufgabe zugrunde, eine Überwachungseinrichtung der eingangs genannten Art zu schaffen, die zuverlässig über den Zulaufkanal eindringende Objekte erkennt und so rechtzeitig das Einleiten von Schutzmaßnahme gegen das insbesondere gewaltsame Eindringen von Fremdobjekten aller Art, insbesondere von Tauchern oder unbemannten Unterwasserfahrzeugen, in das Innere der Industrieanlage bzw. des Kraftwerks ermöglicht.

Die Aufgabe ist erfindungsgemäße durch die Merkmale im Anspruch 1 gelöst.

Die erfindungsgemäße Überwachungseinrichtung hat den Vorteil, das mittels der beiden Detektionssonare ein "akustischer Vorhang" im Zulaufkanal aufgespannt wird, der aus zwei vorzugsweise in Kanalmitte sich kreuzenden Überwachungssektoren zusammengesetzt ist und den gesamten Kanalquerschnitt überdeckt. Der vertikale Öffnungswinkel jedes Überwachungssektors, also der in einer quer zur Strömungsrichtung sich erstreckenden Ebene liegende Öffnungswinkel, ist so bemessen, dass jeweils ein Überwachungssektor mindestens den jenseits der Kanalmitte von der Kanalmitte bis hin zur entfernten Kanalwand sich erstreckenden, Kanalquerschnitt vollständig überdeckt. Ein im Wasserstrom mitgeführtes oder aktiv schwimmendes Objekt muss zwangsläufig den "akustischen Vorhang" durchstoßen, wobei das Durchstoßen akustische Echos auslöst, die über mindestens einen der Schallempfänger erfasst werden. Da der "akustische Vorhang" aus einer stetigen Folge von Schallimpulsen besteht, wird selbst ein schnell sich bewegendes, langgestrecktes Objekt, wie z.B. ein Taucher, wiederholt mit Schallimpulsen abgetastet, so dass bei in Strömungsrichtung ausreichend schmalem "akustischen Vorhang" die Größe des Objekts, d.h. dessen Länge in Strömungsrichtung, erkannt werden kann. Durch die erfindungsgemäße Ausrichtung der Überwachungssektoren unter einem spitzen Winkel schräg gegen die Strömungsrichtung des Wassers ist der den Kanalquerschnitt überdeckende "akustischer Vorhang" einerseits lückenlos und kann andererseits weit entfernt von der Anordnung der Detektionssonare an den Kanalwänden, vorzugsweise in Nähe der Zulauföffnung, aufgespannt werden, so dass eindringende Objekte schon weit vor der Installationsebene der Detektionssonare detektiert werden können. Um die Falschalarmrate zu reduzieren und die Detektion kleiner, nicht interessierender, ungefährlicher Objekte zu unterdrücken, wird ein Detektionsalarm gemäß einer vorteilhaften Ausführungsform der Erfindung nur dann ausgegeben, wenn eine vorgegebene Objektgröße überschritten wird.

Die erfindungsgemäße Überwachungseinrichtung ist unabhängig von dem Verschmutzungsgrad des Zulaufwassers, so dass auch in extrem trübem Wasser eine zuverlässige Detektion von Objekten gewährleistet ist.

Zweckmäßige Ausführungsformen der erfindungsgemäßen Überwachungseinrichtung mit vorteilhaften Weiterbildungen und Ausgestaltungen der Erfindung ergeben sich aus den weiteren Ansprüchen.

Gemäß einer vorteilhaften Ausführungsform der Erfindung ist auf mindestens einer der Kanalwände des Zulaufkanals innerhalb des mindestens einen Überwachungssektors eine Hydrofonstrecke von linear aufgereihten Hydrofonen angeordnet, die somit von dem Detektiossonar "akustisch beleuchtet" wird. An den Signalausgängen der Hydrofone stehen damit gleiche Signalpegel an. Eine Prüfvorrichtung überwacht diesen Signalpegel und gibt ein Warnsignal aus, wenn an mindestens einem Hydrofon ein signifikanter Pegeleinbruch auftritt. Ein solcher signifikanter Pegeleinbruch entsteht dadurch, dass ein Objekt, das den Überwachungssektor durchdringt, entsprechend seiner vertikalen Höhe eine akustische Abschattung einer mehr oder weniger große Anzahl der aneinandergereihten Hydrofone herbeiführt. Wird das Warnsignal der Prüfeinrichtung mit dem von der Auswertevorrichtung der Detektionssonare ausgegebenen Warnsignal "logisch UND" verknüpft, so erhält man eine zusätzliche Verifikation eines erfassten Objekts.

Gemäß einer vorteilhaften Ausführungsform der Erfindung ist die Überwachungsvorrichtung zweistufig ausgelegt und weist zusätzlich eine elektroakustische Identifikationsvorrichtung mit einem abtastenden, hochauflösenden Klassifikationssonar auf. Das mit einem Schallsender und einem Schallempfänger ausgestattete Klassifikationssonar weist einen schwenkbaren, die Kanalhöhe des Zulaufkanals überspannenden Sende- und Empfangssektor auf, der einen sehr schmalen horizontalen Öffnungswinkel in Schwenkrichtung und einen demgegenüber sehr großen vertikalen Öffnungswinkel besitzt und um eine parallel zur Kanalhöhe verlaufende Schwenkachse schwenkbar ist. Das Klassifikationssonar ist stromabwärts des von den Detektionssonare aufgespannten "akustischen Vorhangs" angeordnet und wird mittels des von der Auswertevorrichtung ausgegebenen Warnsignals aktiviert. Der Schwenkweg des vom Klassifikationssonars aufgespannten Sende- und Empfangssektor beträgt 90°, wobei der Sende- und Empfangssektor mit Beginn des Schwenkvorgangs sich parallel zu den Kanalseitenwänden gegen die Strömungsrichtung des Wassers erstreckt und am Ende des Schwenkwegs rechtwinklig dazu, also quer zur Wasserströmung, ausgerichtet ist. Durch das hochauflösende Klassifikationssonar können Form und Größe des eindringenden Objekts sehr genau erfasst und damit das eindringende Objekt identifiziert werden.

Die Erfindung ist anhand eines in der Zeichnung dargestellten Ausführungsbeispiels im folgenden näher beschrieben. Es zeigen in schematischer Weise:
- Fig. 1: eine perspektivische Darstellung eines wasserführenden Zulaufkanals zu einem Kraftwerk mit der ersten Stufe einer zweistufigen Überwachungseinrichtung zum Erkennen von eindringenden Objekten,
- Fig. 2: eine Draufsicht des Zulaufkanals mit installierter erster Stufe der Überwachungseinrichtung,
- Fig. 3: einen Schnitt längs der Linie III - III in Fig. 2,
- Fig. 4: eine perspektivische Darstellung des wasserführenden Zulaufkanals mit der zweiten Stufe der zweistufigen Überwachungseinrichtung,
- Fig. 5: ein Blockschaltbild der zweistufigen Überwachungseinrichtung.

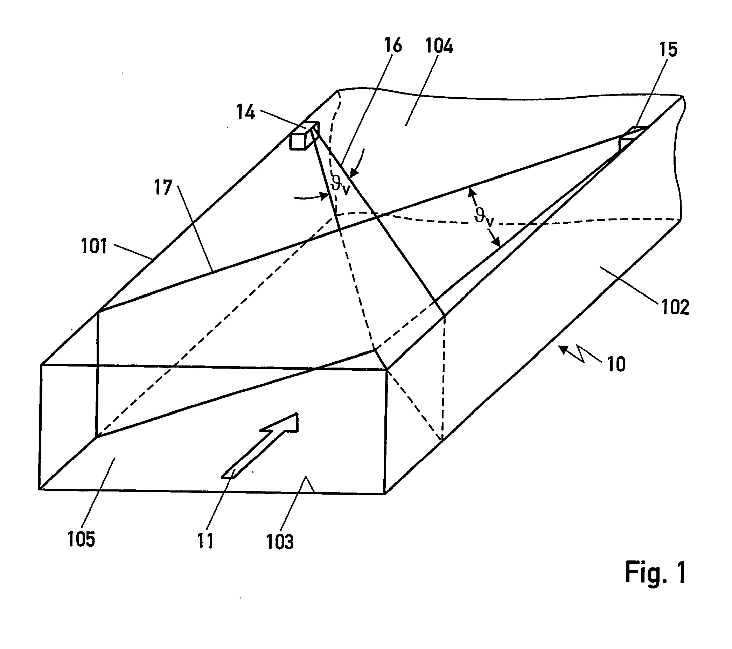

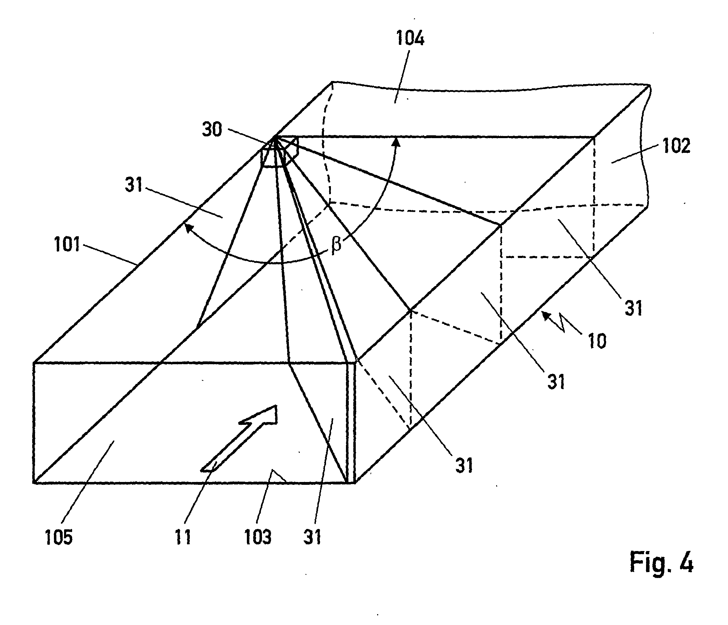

In Fig. 1 und 4 ist schematisch ein wasserführender Zulaufkanal 10 für eine Industrieanlage, z.B. für ein Kraftwerk für fossile Brennstoffe oder ein Kernkraftwerk, perspektivisch dargestellt. Der Zulaufkanal 10 dient zum Zuführen von Kühlwasser, das einem offenen Gewässer, z.B. einem Fluss, entnommen und nach Durchlauf durch das Kraftwerk wieder dem Gewässer zugeführt wird. Der Zulaufkanal 10 ist im Ausführungsbeispiel kastenförmig und weist zwei Kanalseitenwände 101 und 102, einen Kanalboden 103 und eine Kanaldecke 104 auf. Die Kanalzulauföffnung 105 ist üblicherweise unterhalb des Wasserspiegels des Gewässers angeordnet und zum Schutz gegen Eindringen von Treibgut mit einem hier nicht dargestellten Rechen bewehrt. Der Zulaufkanal 10 wird in seinem vollen Querschnitt vom Wasser durchflossen. Die Strömungsrichtung des Wasser ist mit Pfeil 11 gekennzeichnet.

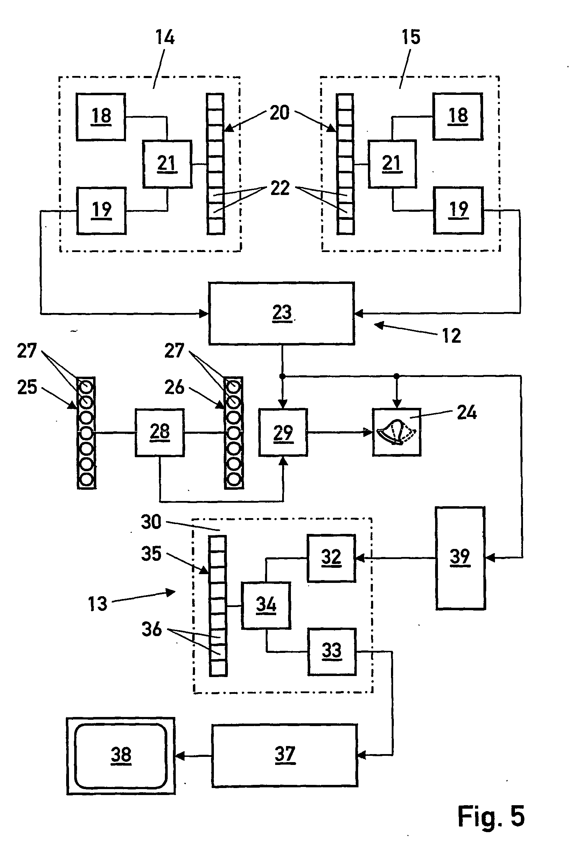

Zum Schutze des unerwünschten Eindringens von Fremdobjekten über den Zulaufkanal 10 in die Anlage, insbesondere zum Schutze gegen ein gewaltsames Eindringen feindlicher Personen oder von Sabotageobjekten, ist der Zulaufkanal 10 mit einer Überwachungseinrichtung ausgestattet, die mit dem Wasserstrom eindringende Fremdobjekte zu erkennen und zu identifizieren vermag. Die Überwachungseinrichtung ist zweistufig aufgebaut und weist als erste Stufe eine elektroakustische Detektionsvorrichtung 12 (Fig. 1), die vorzugsweise nahe der Kanalzulauföffnung 105 am Zulaufkanal 10 installiert ist, und als zweite Stufe eine elektroakustische Identifikationsvorrichtung 13 (Fig. 4) auf. Detektionsvorrichtung 12 und Identifikationsvorrichtung 13 sind aus Gründen einer einfachen Installation an gleicher Stelle des Zulaufkanals 10 angeordnet. Alternativ ist es möglich, die Identifikationsvorrichtung 13 mit Abstand von der Detektionsvorrichtung 12 stromabwärts am Zulaufkanal 12 zu platzieren. In Fig. 5 ist die Überwachungseinrichtung mit Detektionsvorrichtung 12 und Identifikationsvorrichtung 13 im Blockschaltbild dargestellt, während in Fig. 1 die Anordnung der wasserseitigen Komponenten der Detektionsvorrichtung 12 im Zulaufkanal 10 und in Fig. 4 die Anordnung der wasserseitigen Komponenten der Identifikationsvorrichtung 13 im Zulaufkanal 10 schematisiert illustriert ist.

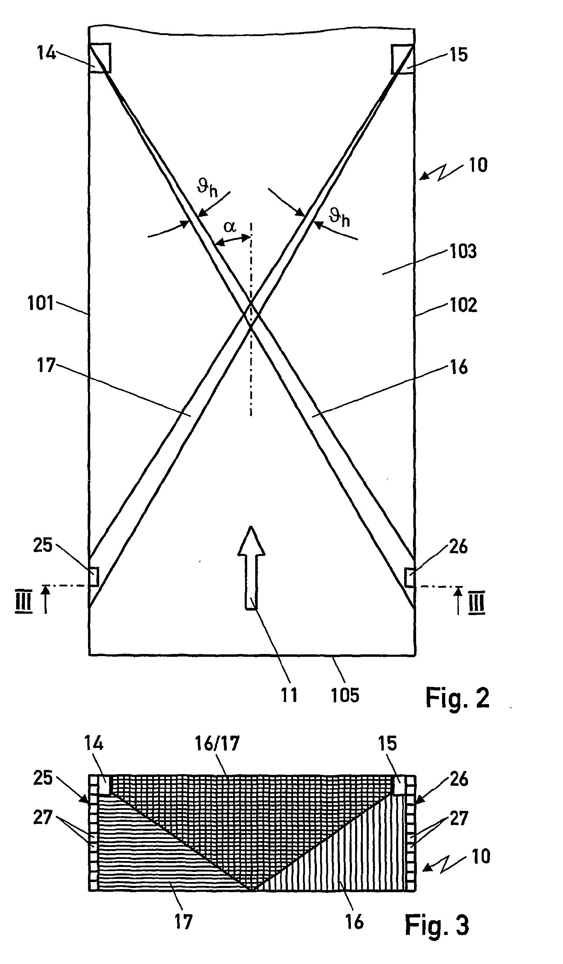

Die Detektionsvorrichtung 12 weist zwei identisch ausgebildete Detektionssonare 14 auf, von denen jeweils ein Detektionssonar 14 an der einen Kanalseitenwand 101 und ein Detektionssonar 15 an der gegenüberliegenden Kanalseitenwand 102 unmittelbar unter der Kanaldecke 104 angeordnet ist. Jedes Detektionssonar 14, 15 spannt in dem Zulaufkanal 10 einen den Kanalquerschnitt überdeckenden Überwachungssektor 16, 17 auf, in den von einem Schallsender 18 (Fig. 5) hochfrequente Schallimpulse mit konstanter Sendefrequenz ausgesendet werden und aus dem mittels eines Schallempfängers 19 Echosignale empfangen werden, die von den Schallimpulsen durch Reflexion oder Streuung an Objekten ausgelöst werden. In bekannter Weise weist der Schallsender 18 einen elektrischen Schallgenerator auf, der elektrische Sendeimpulse erzeugt und über eine elektrische Weiche 21 an eine aus einer Anordnung von elektroakustischen Wandlern bestehenden Antenne 20 legt, die entsprechende Schallimpulse in den Überwachungssektor 16 bzw. 17 abstrahlt. Von der Antenne 20 aufgefasste Echosignale werden über die elektrische Weiche 21 dem Schallempfänger 19 zugeführt, an dessen elektrischen Ausgang eine Auswertevorrichtung 23 angeschlossen ist. Durch entsprechende Ausbildung der Antenne 20 und eine geeignete Richtungsbildung der elektrischen Sende- und Empfangssignale weist jeder der von den Detektionssonaren 14 und 15 aufgespannten Überwachungssektoren 16, 17 einen sehr schmalen, horizontalen Öffnungswinkel ϑₕ (Fig. 2) und einen demgegenüber recht großen vertikalen Öffnungswinkel ϑᵥ (Fig. 1) auf. Beispielhaft beträgt bei einer Kanalbreite von ca. 6m der horizontale Öffnungswinkel ϑₕ = 0,5° und der vertikale Öffnungswinkel ϑᵥ = 50°. Der horizontale Öffnungswinkel ϑₕ liegt dabei in einer zur Strömungsrichtung parallelen Ebene während der vertikale Öffnungswinkel ϑᵥ in einer zu dieser Ebene rechtwinkligen Ebene liegt. Außerdem ist jeder Überwachungssektor 16, 17 unter einem spitzen Winkel α (Fig. 2) zur Strömungsrichtung 11 des Wassers schräg gegen die Strömungsrichtung 11 angestellt. Da die beiden Überwachungssektoren 16, 17 von gegenüberliegenden Kanalseitenwänden 101, 102 ausgehen, kreuzen sie sich in der Kanalmitte und treffen jeweils auf die gegenüberliegende Kanalseitenwand 102 bzw. 101 auf. Der vertikale Öffnungswinkel ϑₕ ist in Abhängigkeit von den Dimensionen des Zulaufkanals 10 so gewählt, dass jeweils ein Überwachungssektor 16 bzw. 17 mindestens den jenseits der Kanalmitte von der Kanalmitte bis zur gegenüberliegenden Kanalseitenwand 102 bzw. 101 sich erstreckenden, halben Kanalquerschnitt vollständig überdeckt. Vorzugsweise wird der vertikale Öffnungswinkel ϑₕ so gewählt, dass die beiden Überwachungssektoren 16, 17 noch vor Erreichen der Kanalmitte die Kanalhöhe vollständig überdecken. Auf diese Weise ist von den beiden Überwachungssektoren 16, 17 im Zulaufkanal 10 ein "akustischer Vorhang" aufgespannt, der vollständig den Kanalquerschnitt überdeckt, wie dies in der Schnittdarstellung der Fig. 3 illustriert ist. Ein in Kanalmitte eindringendes Objekt wird in beiden Überwachungssektoren 16, 17 erfasst, während ein in Fig. 3 am linken Kanalrand sich bewegendes Objekt ausschließlich im Überwachungssektor 17 und ein am rechten Kanalrand sich bewegendes Objekt ausschließlich im Überwachungssektor 16 erfasst wird. Zur Verdeutlichung der Überwachungssektoren 16, 17 sind diese in Fig. 3 quer und senkrecht schraffiert, so dass der Überdeckungsbereich der beiden Überwachungssektoren 16, 17 durch Kreuzschraffur zu erkennen ist.

Ein Objekt, das einen oder beide dieser Überwachungssektoren 16, 17 durchquert, wird mit der Impulsrate der von dem Schallsender 18 ausgesendeten, hochfrequenten Schallimpulse abgetastet. Die Anzahl der das Objekt treffenden Schallimpulse wird bestimmt durch die Geschwindigkeit, mit der das Objekt die Überwachungssektoren 16, 17 durchdrinqt. Bei einer maximal angenommenen Fließ- bzw. Schwimmgeschwindigkeit in Betracht kommender Objekte ist aber die Wiederholrate der Schallimpulse so groß, dass eine ausreichend große Zahl von Schallimpulsen am Objekt Echosignale hervorruft, so dass über die Anzahl der vom Schallempfänger 19 empfangenen Echosignale auf die Länge des Objekts in Strömungsrichtung geschlossen werden kann. Die vom Schallempfänger 19 empfangenen Echosignale der beiden Detektionssonare 14, 15 werden in der Auswertevorrichtung 23 zur Ausgabe eines Warnsignals ausgewertet. Um ungefährliches, kleineres Treibgut aus der Überwachung herauszunehmen und damit die Falschalarmrate zu senken, wird anhand der Anzahl der Echosignale die Objektgröße bestimmt mit einer in der Auswertvorrichtung 23 abgespeicherten Sollgröße für zu erkennende Objekte verglichen. Wird die Sollgröße überschritten, so gibt die Auswertevorrichtung 23 ein Warnsignal aus, das in einer Alarmzentrale 24 ein optisches und akustisches Alarmsignal auslöst.

Für Zwecke einer redundanten Überwachung von eindringenden Objekten ist auf der Kanalseitenwand 101 innerhalb des Überwachungssektors 17 des Detektionssonars 15 eine Hydrofonstrecke 25 und auf der Kanalseitenwand 102 innerhalb des Überwachungssektors 16 des Detektionssonars 14 eine Hydrofonstrecke 26 befestigt. Jede Hydrofonstrecke 25 bzw. 26 besteht aus einer Mehrzahl von linear angeordneten Hydrofonen 27. Jede Hydrofonstrecke 25, 26 erstreckt sich vom Kanalboden 103 bis zur Kanaldecke 104. Somit wird die Hydrofonstrecke 25, die im Auftreffbereich des vom Detektionssonar 15 aufgespannten Überwachungssektors 17 auf der Kanalseitenwand 101 liegt, mit jedem in den Überwachungssektor 16 ausgesandten Schallimpuls akustisch beleuchtet. In gleicher Weise wird die im Auftreffbereich des vom Detektionssonar 14 erzeugten Überwachungssektors 16 auf der Kanalseitenwand 102 liegende Hydrofonstrecke 26 von jedem in den Überwachungssektor 16 ausgesandten Schallimpuls akustisch beleuchtet. An den Hydrofonausgängen steht damit ständig ein Signalpegel an, der von einer an den Hydrofonausgängen angeschlossenen Prüfeinrichtung überwacht wird. Durchläuft ein Objekt einen der Überwachungssektoren 16, 17 so wird je nach vertikaler Größe des Objekts eine kleinere oder größere Anzahl von Hydrofonen 36 gegenüber dem Schallsender 18 abgeschirmt, was zu einem Pegeleinbruch an diesen Hydrofonen 27 führt. Ein in der Prüfvorrichtung 28 festgestellter Pegeleinbruch führt zur Ausgabe eines Warnsignals durch die Prüfvorrichtung 28, womit ein von der Auswertevorrichtung 23 ausgegebenes Warnsignal zusätzlich verifiziert werden kann. Werden die beiden Warnsignale von Auswertevorrichtung 23 und Prüfvorrichtung 28 in einem logisch UND-Glied 29 miteinander verknüpft, so kann das von der Auswertevorrichtung 23 ausgegebene Warnsignal erst nach Verifizierung durch das von der Prüfvorrichtung 28 ausgegebene Warnsignal die Alarmzentrale 24 aktivieren. Selbstverständlich ist es möglich, weitere lineare Hydrofonstrecken auf dem Kanalboden 103 anzuordnen, die wiederum in den Auftreffbereichen der Überwachungssektoren 16, 17 auf dem Kanalboden 103 liegen müssen.

Die Identifikationsvorrichtung 13 der Überwachungsvorrichtung weist ein hochauflösendes, abtastendes Klassifikationssonar 30 auf, das einen fächerartigen, von dem Kanalboden 103 bis zur Kanaldecke 104 reichenden Sende- und Empfangssektor 31 (Fig. 4) im Zulaufkanal 10 aufspannt, der einen sehr schmalen, horizontalen Öffnungswinkel, der beispielhaft 1,5° beträgt, aufweist und um eine parallel zur Kanalhöhe ausgerichtete Schwenkachse um diskrete Winkelinkremente schwenkbar ist. Im Ausführungsbeispiel der Fig. 4 ist das Klassifikationssonar 30 an der Kanalseitenwand 101 unmittelbar unter der Kanaldecke 104 angeordnet. Es kann dabei in derselben Kanalschnittebene wie die Detektionssonare 14, 15 angeordnet sein. Der Schwenkweg des Sende- und Empfangssektor 31 beträgt 90° und ist in Fig. 4 mit dem Schwenkwinkel β gekennzeichnet. Jeder Schwenkvorgang des Sende- und Empfangssektors 31 beginnt an der Kanalseitenwand 101, indem der Sende- und Empfangssektor 31 parallel zu dieser ausgerichtet ist, und endet mit einer Ausrichtung des Sende- und Empfangssektors 31 quer zur Kanalachse bzw. der Wasserströmung 11. In Fig. 4 ist der Sende- und Empfangsektor 31 schematisch in fünf verschiedenen Schwenkstellungen dargestellt. Der vertikale Öffnungswinkel des Sende- und Empfangssektors 31 ist beispielhaft 40° gewählt, so dass bereits nach einem kurzen Abstand vom Klassifikationssonar 30 der Sende- Empfangssektor 31 die volle Kanalhöhe des Zulaufkanals 10 überdeckt.

Wie im Blockschaltbild der Fig. 5 skizziert ist, weist das Klassifikationssonar 30 in bekannter Weise einen Schallsender 32 und einen Schallempfänger 33 auf, die über eine elektrische Weiche 34 mit einer Antenne 35 aus einer Anordnung von elektroakustischen Wandlern 36 verbunden ist. In gleicher Weise wie bei den Detektionssonaren 14, 15 sendet der Schallsender 32 eine Folge von hochfrequenten Schallimpulsen in den Sende- und Empfangssektor 31 und empfängt der Schallempfänger 33 die von einem eindringenden Objekt zurückgestreuten Echosignale. Diese werden in einer Signalverarbeitungseinheit 37 zu einem Sonarbild des eindringenden Objekts verarbeitet, das auf einem Monitor 38 dargestellt wird.

Im Gegensatz zu der Detektionsvorrichtung 12, die ständig aktiviert ist, wird die Identifikationsvorrichtung 13 nur dann in Betrieb gesetzt, wenn von der Detektionsvorrichtung 12 ein Warnsignal ausgegeben worden ist. Dieses Warnsignal wird hierzu einer Steuereinheit 39 zugeführt, die daraufhin die Identifikationsvorrichtung 13 durch Ansteuern des Klassifikationssonars 30 aktiviert.

## Patentansprüche

1. Überwachungseinrichtung für einen wasserführenden Zulaufkanal (10), insbesondere zu einer Industrieanlage oder einem Kraftwerk, zum Erkennen von mit dem Wasserstrom eindringenden Objekten, mit an einander gegenüberliegenden Kanalseitenwänden (101, 102) des Zulaufkanals (10) angeordneten Detektionssonaren (14, 15), die zwei gemeinsam den Kanalquerschnitt bedeckende Überwachungssektoren (16, 17) aufspannen, wobei jeder Überwachungssektor (16, 17) durch einen in einer quer zur Strömungsrichtung (11) des Wassers ausgerichteten Ebene liegenden vertikalen Öffnungswinkel (ϑᵥ) und einen in einer dazu rechtwinklig ausgerichteten Ebene liegenden, entsprechend einer gewünschten, akustischen Objektauflösung bemessenen horizontalen Öffnungswinkel (ϑₕ) festgelegt ist und jedes Detektionssonar (14, 15) einen Schallimpulse in seinen Überwachungssektor (16, 17) aussendenden Schallsender (18) und einen von den Schallimpulsen im Überwachungssektor (16, 17) ausgelöste Echosignale empfangenden Schallempfänger (19) aufweist, und mit einer an den Schallempfängern (19) angeschlossenen Auswertevorrichtung (23), die bei Echosignalempfang ein Warnsignal ausgibt, **dadurch gekennzeichnet, dass** der vertikale Öffnungswinkel (ϑᵥ) der Überwachungssektion (16, 17) (ϑᵥ) so groß bemessen ist, dass jeweils ein Überwachungssektor (16, 17) mindestens den jenseits der Kanalmitte von der Kanalmitte bis hin zur entfernten Kanalseitenwand (102, 101) sich erstreckenden, halben Kanalquerschnitt vollständig überdeckt und dass die Überwachungssektoren (16, 17) unter einem spitzen Winkel (α) zur Strömungsrichtung (11) des Wassers schräg gegen die Strömungsrichtung (11) angestellt sind.

2. Überwachungseinrichtung nach Anspruch 1, **dadurch gekennzeichnet, dass** die Auswertevorrichtung (23) mittels der Echosignale.die Objektgröße bestimmt und mit einer vorgegebenen Objektgröße vergleicht und das Warnsignal nur bei Überschreiten der vorgegebenen Objektgröße ausgibt.

3. Überwachungseinrichtung nach Anspruch 1 oder 2, **dadurch gekennzeichnet, dass** auf mindestens einer der Kanalseitenwände (101, 102) des Zulaufkanals (10) innerhalb des Überwachungssektors (16, 17) eine Hydrofonstrecke (25, 26) aus linear aufgereihten Hydrofonen (27) angeordnet ist und dass an den Signalausgängen der Hydrofone (27) eine den Signalpegel am Signalausgang der Hydrofone (27) überwachende Prüfvorrichtung (28) angeschlossen ist, die bei signifikantem Pegeleinbruch an mindestens einem der Hydrofone (27) ein Warnsignal ausgibt.

4. Überwachungseinrichtung nach Anspruch 3, **dadurch gekennzeichnet, dass** die Warnsignale von Auswertevorrichtung (23) und Prüfvorrichtung (28) über ein logisch UND-Glied (29) miteinander verknüpft sind.

5. Überwachungseinrichtung nach einem der Ansprüche 1 bis 4, **gekennzeichnet durch** eine elektroakustische Identifikationsvorrichtung (13) mit einem hochauflösenden, abtastenden Klassifikationssonar (30), das einen schwenkbaren, die Kanalhöhe überspannenden Sende- und Empfangssektor (31) aufspannt, der einen sehr schmalen, horizontalen Öffnungswinkel, z.B. 0,5°, in Schwenkrichtung aufweist und um eine parallel zur Kanalhöhe verlaufende Schwenkachse um vorzugsweise diskrete Winkelinkremente schwenkbar ist.

6. Überwachungseinrichtung nach Anspruch 5, **dadurch gekennzeichnet, dass** das Klassifikationssonar (30) in derselben Kanalquerschnittszone angeordnet ist wie die Detektionssonare (14, 15).

7. Überwachungseinrichtung nach Anspruch 5, **dadurch gekennzeichnet, dass** das Klassifikationssonar (30) mit Abstand von den Detektionssonaren (14, 15) stromabwärts von diesen im Zulaufkanal (10) angeordnet ist.

8. Überwachungseinrichtung nach einem der Ansprüche 5 bis 7, **dadurch gekennzeichnet, dass** das Klassifikationssonar (30) an einer parallel zur Strömungsrichtung (11) des Wassers sich erstreckenden Kanalseitenwand (101), vorzugsweise an oder im geringen Abstand von der Kanaldecke (104), angeordnet ist.

9. Überwachungseinrichtung nach Anspruch 8, **dadurch gekennzeichnet, dass** der Schwenkweg des vom Klassifikationssonar (30) aufgespannten Sende- und Empfangssektors (31) 90° beträgt und dass mit Beginn des Schwenkvorgangs der Sende- Empfangssektor (31) sich annähernd parallel zur Strömungsrichtung (11) des Wassers gegen die Strömungsrichtung (11) erstreckt.

10. Überwachungseinrichtung nach einem der Ansprüche 5 bis 9, **dadurch gekennzeichnet, dass** die elektroakustische Identifikationsvorrichtung (13) mittels des von der Auswertevorrichtung (23) ausgegebenen Warnsignals aktivierbar ist.

## Claims

1. Monitoring device for an inlet channel (10) which carries water, in particular to an industrial plant or a power station, for identification of objects which enter with the water flow, having detection sonars (14, 15) which are arranged on mutually opposite channel side walls (101, 102) of the inlet channel (10) and cover two monitoring sectors (16, 17) which together cover the channel cross section, with each monitoring sector (16, 17) being defined by a vertical beam angle (θᵥ), which lies on a plane aligned transversely with respect to the flow direction (11) of the water, and a horizontal beam angle (θₕ), which lies on a plane aligned at right angles to this and is designed for a desired acoustic object resolution, and with each detection sonar (14, 15) having a sound transmitter (18) which emits sound pulses into its monitoring sector (16, 17), and having a sound receiver (19) which receives echo signals triggered by the sound pulses in the monitoring sector (16, 17) and having an evaluation apparatus (23) which is connected to the sound receivers (19) and emits a warning signal on reception of echo signals, **characterized in that** the vertical beam angle (θᵥ) of the monitoring section (16, 17) (θᵥ) is designed to be sufficiently large that one monitoring sector (16, 17) in each case completely covers at least that half channel cross section which extends beyond the channel centre from the channel centre to the remote channel side wall (102, 101), and **in that** the monitoring sectors (16, 17) are positioned at an acute angle (α) to the flow direction (11) of the water, obliquely with respect to the flow direction (11).

2. Monitoring device according to Claim 1, **characterized in that** the evaluation apparatus (23) uses the echo signals to determine the object size, and compares this with a predetermined object size, and emits the warning signal only if the predetermined object size is exceeded.

3. Monitoring device according to Claim 1 or 2, **characterized in that** a hydrophone section (25, 26) composed of hydrophones (27) arranged linearly in one or more rows is arranged on at least one of the channel side walls (101, 102) of the inlet channel (10) within the monitoring sector (16, 17), and **in that** a test apparatus (28) which monitors the signal level at the signal output of the hydrophones (27) is connected to the signal outputs of the hydrophones (27) and emits a warning signal if there is a significant drop in the level at at least one of the hydrophones (27).

4. Monitoring device according to Claim 3, **characterized in that** the warning signals from the evaluation apparatus (23) and from the test apparatus (28) are logically linked with one another via a logic AND gate (29).

5. Monitoring device according to one of Claims 1 to 4, **characterized by** an electroacoustic identification apparatus (13) having a high-resolution, scanning classification sonar (30), which covers a transmission and reception sector (31) which can be scanned and covers the channel height, and which has a very narrow horizontal beam angle of, for example, 0.5°, in the scanning direction, and can be scanned, preferably in discrete angle increments, about a scanning axis which runs parallel to the channel height.

6. Monitoring device according to Claim 5, **characterized in that** the classification sonar (30) is arranged in the same channel cross section zone as the detection sonars (14, 15).

7. Monitoring device according to Claim 5, **characterized in that** the classification sonar (30) is arranged at a distance from the detection sonars (14, 15), downstream from them, in the inlet channel (10).

8. Monitoring device according to one of Claims 5 to 7, **characterized in that** the classification sonar (30) is arranged on a channel side wall (101) which extends parallel to the flow direction (11) of the water, preferably at a short distance from the channel top (104).

9. Monitoring device according to Claim 8, **characterized in that** the scanning movement of the transmission and reception sector (31) which is covered by the classification sonar (30) is 90°, and **in that**, at the start of the scanning process, the transmission and reception sector (31) extends approximately parallel to the flow direction (11) of the water, but in the opposite direction to the flow direction (11).

10. Monitoring device according to one of Claims 5 to 9, **characterized in that** the electroacoustic identification apparatus (13) can be activated by means of the warning signal which is emitted by the evaluation apparatus (23).

## Revendications

1. Dispositif de surveillance pour un canal d'amenée d'eau (10), notamment vers une installation industrielle ou une centrale, pour détecter la présence d'objets entraînés dans le courant d'eau, comprenant des sonars de détection (14, 15) disposés au niveau des parois latérales de canal opposées (101, 102) du canal d'amenée (10), qui balayent deux secteurs de surveillance (16, 17) couvrant ensemble la section transversale du canal, chaque secteur de surveillance (16, 17) étant défini par un angle d'ouverture (θᵥ) vertical situé dans un plan orienté transversalement au sens d'écoulement (11) de l'eau et un angle d'ouverture (θₕ) horizontal dimensionné en fonction d'une résolution d'objet acoustique souhaitée, situé dans un plan orienté perpendiculairement à celui-ci, et chaque sonar de détection (14, 15) présente un émetteur acoustique (18) émettant des impulsions acoustiques dans son secteur de surveillance (16, 17) et un récepteur acoustique (19) recevant des signaux d'écho diffusés par les impulsions acoustiques dans le secteur de surveillance (16, 17), et comprenant un dispositif d'analyse (23) raccordé aux récepteurs acoustiques (19), qui émet un signal d'avertissement à la réception d'un signal d'écho, **caractérisé en ce que** l'angle d'ouverture vertical (θᵥ) de la section de surveillance (16, 17) est dimensionné de telle sorte qu'un secteur de surveillance (16, 17) recouvre à chaque fois complètement au moins la moitié de la section transversale du canal s'étendant de chaque côté du milieu du canal depuis le milieu du canal jusqu'à la paroi latérale de canal distale (102, 101), et **en ce que** les secteurs de surveillance (16, 17) sont inclinés suivant un angle aigu (α) par rapport au sens d'écoulement (11) de l'eau, obliquement en sens opposé à l'écoulement (11).

2. Dispositif de surveillance selon la revendication 1, **caractérisé en ce que** le dispositif d'analyse (23) détermine au moyen des signaux d'écho la taille des objets et la compare avec une taille d'objet prédéfinie et n'émet le signal d'avertissement que dans le cas d'un dépassement de la taille d'objet prédéfinie.

3. Dispositif de surveillance selon la revendication 1 ou 2, **caractérisé en ce qu'**une section d'hydrophone (25, 26) constituée d'hydrophones (27) en rangées alignées est disposée sur au moins l'une des parois latérales (101, 102) du canal d'amenée (10) à l'intérieur du secteur de surveillance (16, 17), et **en ce qu'**un dispositif de contrôle (28) surveillant le niveau de signal à la sortie de signal des hydrophones (27) est raccordé aux sorties de signaux des hydrophones (27) et émet un signal d'avertissement en cas d'intrusion de bruit considérable au niveau d'au moins l'un des hydrophones (27).

4. Dispositif de surveillance selon la revendication 3, **caractérisé en ce que** les signaux d'avertissement du dispositif d'analyse (23) et du dispositif de contrôle (28) sont connectés l'un à l'autre par le biais d'un opérateur logique ET (29).

5. Dispositif de surveillance selon l'une quelconque des revendications 1 à 4, **caractérisé par** un dispositif d'identification électroacoustique (13) comprenant un sonar de classification à balayage et à haute résolution (30), qui couvre un secteur émetteur et récepteur (31) pivotant, couvrant la hauteur du canal, qui présente un angle d'ouverture horizontal très étroit, par exemple de 0,5°, dans la direction de pivotement, et qui peut pivoter autour d'un axe de pivotement s'étendant parallèlement à la hauteur du canal, suivant des incréments angulaires de préférence discrets.

6. Dispositif de surveillance selon la revendication 5, **caractérisé en ce que** le sonar de classification (30) est disposé dans la même zone de section transversale du canal que les sonars de détection (14, 15).

7. Dispositif de surveillance selon la revendication 5, **caractérisé en ce que** le sonar de classification (30) est disposé à distance des sonars de détection (14, 15) en aval de ceux-ci dans le canal d'amenée (10).

8. Dispositif de surveillance selon l'une quelconque des revendications 5 à 7, **caractérisé en ce que** le sonar de classification (30) est disposé sur une paroi latérale de canal (101) s'étendant parallèlement au sens d'écoulement (11) de l'eau, de préférence sur le couvercle du canal (104) ou à faible distance de celui-ci.

9. Dispositif de surveillance selon la revendication 8, **caractérisé en ce que** la course de pivotement du secteur émetteur et récepteur (31) couvert par le sonar de classification (30) est de 90° et **en ce qu'**au début de l'opération de pivotement, le secteur émetteur et récepteur (31) s'étend approximativement parallèlement au sens d'écoulement (11) de l'eau en sens opposé à l'écoulement (11).

10. Dispositif de surveillance selon l'une quelconque des revendications 5 à 9, **caractérisé en ce que** le dispositif d'identification électroacoustique (13) peut être activé au moyen du signal d'avertissement émis par le dispositif d'analyse (23).
